(19) Europäisches Patentamt
European Patent Office
Office européen des brevets

(11) Veröffentlichungsnummer: **0 347 516 B1**

# (12) EUROPÄISCHE PATENTSCHRIFT

(45) Veröffentlichungstag der Patentschrift: **06.10.93**

(21) Anmeldenummer: **89100051.5**

(22) Anmeldetag: **03.01.89**

(51) Int. Cl.5: **C08F 299/00**, C08F 299/04, C08F 299/02, C08L 67/06, C08L 29/04, C08L 1/08

## (54) Lösungsmittelfreie, monomerarme bzw. monomerfreie, polymerisierbare Schmelzmasse.

(30) Priorität: **26.04.88 DE 3814111**

(43) Veröffentlichungstag der Anmeldung:
**27.12.89 Patentblatt 89/52**

(45) Bekanntmachung des Hinweises auf die Patenterteilung:
**06.10.93 Patentblatt 93/40**

(84) Benannte Vertragsstaaten:
**AT BE CH DE ES FR GB GR IT LI LU NL SE**

(56) Entgegenhaltungen:

**KEINE ENTGEGENHALTENDE DOKUMENTE**

(73) Patentinhaber: **Bolte, Georg, Dr.**
**Maximilian-Kolbe-Strasse 48**
**D-33790 Halle(DE)**

Patentinhaber: **Hinterwaldner, Rudolf**
**Postfach 90 05 25**
**D-81505 München(DE)**

(72) Erfinder: **Bolte, Georg, Dr.**
**Maximilian-Kolbe-Strasse 48**
**D-33790 Halle(DE)**
Erfinder: **Hinterwaldner, Rudolf**
**Postfach 90 05 25**
**D-81505 München(DE)**

(74) Vertreter: **von Füner, Alexander, Dr. et al**
**Patentanwälte v. Füner, Ebbinghaus, Finck**
**Mariahilfplatz 2 & 3**
**D-81541 München (DE)**

EP 0 347 516 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand dar EP-A-270 831 ist eine lösungsmittelfreie, monomerarme bzw. monomerfreie, polymerisierbare und strahlenhärtbare Schmelzmasse zum Beschichten von flächigen Substraten und/oder Formkörpern aus Metall, Kunststoff, Cellulose-Materialien und/oder anorganischen Materialien und ein Verfahren zu deren Herstellung. Diese Schmelzmasse ist im besonderen zum korrosionsbeständigen und abrasionsfesten Ausrüsten von flächigen Packmittelsubstraten, vorzugsweise für die Lebensmittel- und Pharmazieverpakkung, geeignet. Aber auch für andere Einsatzgebiete sind die mit diesen Schmelamassen ausgerüsteten Substrate einsetabar, wie z.B. für den Karosseriebau, Bauwesen und dgl. Über die Aufgaben und Funktionen solcher korrosionsbeständigen und abrasionsfesten Ausrüstungen und den damit verbundenen arbeitshygienischen, ökologischen und gegebenenfalls physiologischen Problemen wird auf den in der EP-A-270831 beschriebenen Stand der Technik verwiesen.

Die in der dort beschriebenen hydroxylgruppenhaltigen Polymere A und B sind mit ethylenisch ungesättigten Gruppen, insbesondere mittels monomeren Acryl-, Methacrylsäuren und/oder deren Derivate funktionalisiert. Analoges gilt für die Komponente C, deren ethylenisch ungesättigte Gruppen, vorzugsweise Acryl- und/oder Methacrylgruppen, von monomeren Acryl- und/oder Methacrylsäuren abstammen. Wenngleich sich solche Funktionalisierungen durch Acrylierung mit monomeren Acryl- und/oder Methacrylverbindungen in der industriellen Praxis bewährt haben, blieben eine Reihe von kritischen Eigenschaften problematisch. Dazu gehören u.a. die höheren Schrumpfwerte beim Härten bzw. Vernetzen, die Sprödigkeit der damit hergestellten Netzwerke und die allgemeinen Hautirritation und -empfindlichkeit. Mit der zweiten Generation an polyfunktionellen Acrylaten und Methacrylaten aus Polyolen mit höheren Molekulargewichten konnten diese und andere Nachteile zwar etwas reduziert werden, jedoch zeigte sich in vielen Fällen eine nicht ausreichende Resistenz gegenüber UV-Licht, diversen Chemikalien und Säuren.

Aufgabe der vorliegenden Erfindung ist die Weiterentwicklung der in der EP-A-270 831 beschriebenen polyerisierbaren Schmelzmasse zur Lösung kritischer Probleme in der Herstellung, Verarbeitung und Anwendung.

Gegenstand dieser Erfindung ist somit eine Lösungsmittelfreie, monomerarme bzw. -freie, polymerisierbare Schmelzmasse zum korrosionsbeständigen, abrasionsfesten Austüsten und/oder zur Ausbildung eines Schutzfilmes mit Barriereeigenschaften auf flächigen Substraten und Formkörpern aus Metall, Kunststoff, Cellulose-Materialien und/oder anorganischen Materialien, insbesondere solche für Verpackungszwecke, bestehend aus

a) einem oder mehreren polymerisierbaren, hydroxylhaltigen Polymeren mit einem mittleren Molekulargewicht ($\overline{M}_w$) zwischen 1.000 und 500.000 und einer Glasüberganstemperatur ($T_g$) $\geqq$ +20 °C und/oder

b) einem oder mehreren polymerisierbaren, linearen, unverzweigten und/oder verzweigten Polyestern und/oder deren Copolymeren mit einem mittleren Molekulargewicht ($\overline{M}_w$) zwischen 800 und 50.000 und einer Glasübergangstemperatur ($T_g$) $\geqq$ +50 °C und/oder

c) einem polymersisierbaren, ethtlenisch ungesättigte Gruppen tragenden Oligomer aus Acryl-, Methacryl-, Ether-, Ester-,Urethan-, Amid-, Imid-, Epoxid-, Siloxan-, Phenol-,Novolak- und/oder Mercaptoverbindungen mit einem mittleren Molekulargewicht (($\overline{M}_w$) von 400 bis 10.000 und

d) gegebenfalls weiteren bekannten Zusätzen,

nach EP-A-270 831, die dadurch gekennzeichnet ist, daß sie solche Komponenten a), b) und/oder c) enthält, die mit einer oder mehreren dimeren und/oder oligomeren Acrylsäure der allgemeinen Formel

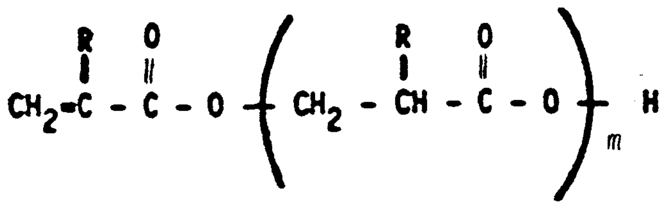

worin R = H, -CN, Halogen und/oder eine Alkylguppe mit 1 bis 4 C-Atomen, m = eine Zahl zwischen 1 und 5 ist,
funktionolisiert worden sind.

Es ist bevorzugt, daß wenigstens eine der polymerisierbaren Verbindungen teilkristallin und/oder kristallin ist.

Es ist weiterhin bevorzugt, daß das hydroxylgruppenhaltige Polymer A ein Cellulosederivat, insbesondere ein Celluloseester und/oder Celluloseether mit einem Gehalt von mindestens 0,1 Gew.-% an reaktiven

Acryl- und/oder Methacrylgruppen ist und ein mittleres Molekulargewicht ($\overline{M}_w$) zwischen 10.000 und 250.000 besitzt.

Es ist ferner bevorzugt, daß das hydroxylgruppenhaltige Polymer A ein Polyvinylalkoholderivat mit einem Gehalt von ≧ 0,1 Gew.-% an reaktiven Acryl- und/oder Methacrylgruppen, mit einem mittleren Molekulargewicht ($\overline{M}_w$) zwischen 10.000 und 100.000 und einer Glasübergangstemperatur ($T_g$) ≧ + 20 °C ist.

Es ist ferner bevorzugt, daß das hydroxylgruppenhaltige Polymer A ein Phenol- oder Novolakderivat mit einem Gehalt von ≧ 0,1 Gew.-% an reaktiven Acryl- und/oder Methacrylgruppen, mit einem mittleren Molekulargewicht ($\overline{M}_w$) zwischen 1.000 und 50.000 und einer Glasübergangstemperatur ($T_g$) ≧ +20 °C ist.

Es ist außerdem bevorzugt, daß das Polymer B ein linearer unverzweigter und/oder verzweigter Polyester und/oder Copolyester mit einem Gehalt von ≧ 0,1 Gew.-% an reaktiven Acryl- und/oder Methacrylgruppen, mit einem mittleren Molekulargewicht ($\overline{M}_w$) zwischen 1.000 und 20.000, insbesondere 1.000 und 10.000, und einer Glasübergangstemperatur ($T_g$) ≦ + 50 °C ist.

Es ist weiterhin bevorzugt, daß das Polymer B ein hydroxylgruppentragender Basispolyester aus

a) Hydroxylpolyester mit verzweigter, aus Polyestereinheiten bestehenden Ketten mit Verzweigungen an dritten und höheren polyesterbildenden Funktionen und/oder

b) Hydroxylpolyester mit über Ester- oder Ethergruppen von dritten oder höheren polyesterbildenden Funktionen gebundenen Alkylseitenketten mit 2 bis 50 C-Atomen, insbesondere 4 bis 36 C-Atomen, in der Alkylgruppe mit einem Gehalt von ≧ 0,1 Gew.-% an reaktiven Acryl- und/oder Methacrylgruppen, mit einem mittleren Molekulargewicht ($\overline{M}_w$) von 1.000 bis 20.000, insbesondere 1.000 bis 10.000, und einer Glasübergangstemperatur ($T_g$) ≦ + 50 °C, insbesondere ≦ + 20 °C, ist.

Gegenstand der Erfindung ist ferner ein Verfahren zur Herstellung der Schmelzmassen, das dadurch gekennzeichnet ist, daß man die Komponente A gegebenenfalls in an sich bekannter Weise mit einem Schutzgas spült bzw. wäscht und/oder in einer wäßrigen Suspension, vorzugsweise unter Vakuum, entgast und die Komponente A auf ihren Schmelz- bzw. Erweichungspunkt vorwärmt, um +20 °C bis 60 °C über den Schmelz- bzw. Erwichungspunkt erhitzt, gegebenenfalls die Komponente B sowie gegebenenfalls C und/oder D unter einer Schutzgasatmosphäre zusetzt, wobei die Komponente B bzw. C ebenfalls auf Temperaturen vorerhitzt werden, die mindestens dem Schmelz- bzw. Erweichungspunkt der Komponente A entsprechen, sowie gegebenenfalls die Komponente D vorzugsweise im vorgewärmten Zustand zusetzt und anschließend die so aufbereitete Schmelzmasse entgast.

Es ist weiterhin bevorzugt, daß man die Komponente B aufschmilzt, gegebenenfalsl in Schutzgasatmosphäre, entgast und danach gegebenenfalls die Komponente C und/oder D zusetzt.

Es ist ferner bevorzugt, daß vor der Entgasung der wäßrigen Suspension in der wäßrigen Phase eine Vortrocknung bei einer Temperatur von ca. 10 °C unter dem Schmelz- bzw. Erweichungspunkt der Komponente A erfolgt.

Es ist außerdem bevorzugt, daß die Schlußentgasung bei einem Vakuum bis zu $10^{-1}$ Torr erfolgt.

Es ist weiterhin bevorzugt, daß die Schmelzmasse schnell abgekühlt und gegebenenfalls granuliert wird.

Es ist ferner bevorzugt, daß man als Schutzgas eines aus der Gruppe Stickstoff, Kohlendioxid und Edelgas einsetzt.

Gegenstand der Erfindung ist außerdem ein Verfahren zur Verarbeitung und Aufbringung der Schmelzmasse auf flächige Substrate und/oder Formkörper, das dadurch gekennzeichnet ist, daß man das Substrat und/oder den Formkörper auf mindestens ≧ + 50 °C vorwärmt und dann die flüssige Schmelzmasse in an sich bekannter Weise aufträgt und anschließend in an sich bekannter Weise polymerisiert.

Es ist bevorzugt, daß man nach dem Auftrag der flüssigen Schmelzmasse diese in an sich bekannter Weise vorpolymerisiert bis zur ausreichenden weiteren Bearbeitung, dann das Substrat bzw. den Formköper verformt und anschließend in bekannter Weise fertig härtet.

Es ist weiterhin bevorzugt, daß man in einem inerten Medium arbeitet.

Es ist ferner bevorzugt, daß man Stickstoff, Kohlendioxid oder Edelgase verwendet.

Es ist außerdem bevorzugt, daß man das inerte Medium vorwärmt.

Es ist weiterhin bevorzugt, daß man im Falle von Kunststoffen als Substrat oder Formkörper diese auf eine Temperatur vorwärmt, die ≦ 10 °C unter dem Erweichungspunkt liegt.

Es ist ferner bevorzugt, daß man im Falle von Cellulose bzw. anorganischen Materialien als Substrat diese auf eine Temperatur ≧ + 100 °C vorwärmt.

Es ist außerdem bevorzugt, daß man die Härtung freiradikalisch mit Peroxid- bzw. Hydroperoxidinitiatoren in Wärme oder mittels UV- oder mittels Elektronenstrahl durchführt.

Es ist weiterhin bevorzugt, daß man die Polymerisation in an sich bekannter Weise mittels Elektronenstrahl durchführt.

Gegenstand der Erfindung ist ferner ein Verfahren zum Polymerisieren bzw. Härten der Schmelzmasse, das dadurch gekennzeichnet ist, daß man Trink- oder voll entsalztes Wasser auf die auf ein Substrat heiß aufgetragene Polymerisier- und Schmelzmassen kalt aufsprüht und gleichzeitig die beschichteten Substrate unter Bildung einer Atmosphäre hoher Luftfeuchtigkeit und Niederschlag eines Taus auf der nichtgehärteten Schmelzmassenoberfläche abkühlt und nach dem Aushärten und Polymerisieren das noch vorhandene Wasser in an sich bekannter Weise entfernt.

Die dimere Acrylsäure mit der chemischen Bezeichnung "β-Acryloxypropionsäure" ist seit langem bekannt. Sie entsteht als Nebenprodukt bei der Herstellung von monomerer Acrylsäure ($CH_2 = CH\text{-}COOH$). Jedoch hat man sich mit ihr und anderen oligomeren Acrylsäuren in der chemischen Technik wenig auseinandergesetzt.

Die dimere Acrylsäure läßt sich im Laboratorium über die MICHEAL-Addition mit hoher Reinheit herstellen. Bei einer industriellen Produktion fallen - aus wirtschaftlichen Gründen - in Abhängigkeit der Additionsbedingungen unterschiedliche Gemische aus dimeren und oligomeren Acrylsäuren an. Die MICHEAL-Addition kann jedoch so gesteuert werden, daß z.B. die Anteile der dimeren Acrylsäure ≧ 50% in einem solchen Gemisch sind.

In ihren typischen Eigenschaften unterscheiden sich die dimeren und oligomeren Acrylsäuren von der monomeren Acryl- bzw. Methacrylsäure, wie dies in Tabelle 1 dargestellt wird. Analoges gilt auch für Gemische aus dimeren und oligomeren Acrylsäuren.

Die Zusammensetzung bzw. die Verteilung der dimeren und oligomeren Acrylsäuregemische, die aus dimeren, trimeren, tetrameren und/oder pentameren Acrylsäuren der allgemeinen Formel

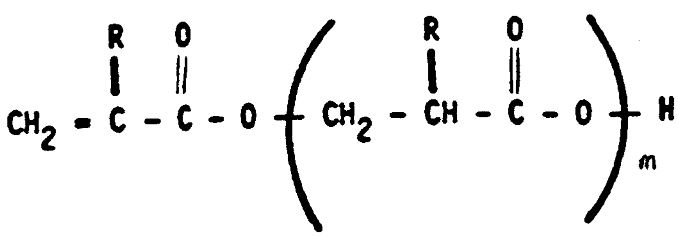

wobei R und m die vorstehende Bedeutung haben,
bestehen, erfolgt mit der Indexzahl "m", die zwischen 1 und 5 liegt. Ein typisches Beispiel für eine solche Verteilung mit einem m-Wert von 1,4 ist folgendes:

m = 0 1 2 3 bis 5
% = 5 55 20 20

Zum Funktionalisieren der Komponenten a), b) und c) der EP-A-270 831 sind die dimeren und/oder oligomeren Acrylsäuren deshalb besonders geeignet, wie überraschenderweise festgestellt wurde, weil sie im Vergleich zu den monomeren Acrylsäuren eine Reihe von Vorteilen besitzen. Diese sind u.a. folgende:

- höhere Reaktivität beim Polymerisieren und der Strahlenhärtung;
- höhere Azidität;
- gesteigerte Adhäsion (Haftung) beim Einsatz von damit funktionalisierten Rückgratpolymeren (Komponente a) und b)) und/oder den damit hergestellten Esterverbindungen (Komponente c)) in Überzugsmassen für Metallsubstrate;
- flexiblere Endprodukte, wodurch die Verformbarkeit verbessert wird;
- niedrigere Schrumpfwerte beim Härten;
- verbesserte Chemikalien- und Witterungsbeständigkeiten;
- erhöhte Viskosität und reduzierter Dampfdruck, bedingt durch höhere Molekulargewichte und
- stark reduzierte Toxizität und Hautirritation.

Mit diesen dimeren und oligomeren Acrylsäuren lassen sich Veresterungen mit mono-, bi-, tri- und polyfunktionellen Hydroxylgruppen tragenden Verbindungen, wie Alkohole, Polyole, durchführen. Die mono- und multifunktionellen Ester aus dimeren und/oder oligomeren Acrylsäuren können über direkte Veresterungen nach allgemein bekannten Verfahren - wie die bekannten konventionellen Ester aus monomeren Acrylsäuren - hergestellt werden. Sie müssen ebenfalls mit Inhibitoren stabilisiert werden. In der Tabelle 2 sind die Eigenschaften der monomeren und oligomeren Acrylsäuren zusammengefaßt. Wenn nachstehend von dimerer Acrylsäure bzw. Acryloxypropionsäure und deren Derivaten gesprochen wird, so sind darunter auch solche Verbindungen zu verstehen, die aus einer tri-, tetra- und/oder pentameren Acrylsäure und deren Gemische gemäß der vorstehenden allgemeinen Formel erhalten worden sind.

Als typische Vertreter dieser neuen polymerisierbaren und strahlenhärtbaren Verbindungen werden unter anderem folgende aufgeführt:

Säuren

Acryloxypropionsäure, Methacryloxypropionsäure, Cyanacryloxypropionsäure, Acryloxypropionyloxycarbonylpropionsäure, Chloracryloxypropionsäure und dergl.

Säurederivate

Acryloxypropionsäuremethylester, Acryloxypropionsäureethylester, Di-Acryloxypropionsäure-1,3- bzw. 1,4-butandiolester, Di-Acryloxypropionsäurediethylenglykolester, Tri-Acryloxypropionsäuretrimethylpropanester, Di-Acryloxypropionsäureneopentylglykolester, Di-Acryloxypropionsäureethoxyneopentylglykolester, Acryloxypropionsäureamid, N-Methylolacryloxypropionsäureamid.

Die Funktionalisierung der Komponenten a), b) und/oder c) mit einer oder mehreren der erfindungsgemäßen dimeren Acrylsäuren und/oder deren Derivaten, gegebenenfalls Kombination mit den konventionellen Acryl- bzw. Methacrylsäureverbindungen, erfolgt über bekannte Verfahrenstechniken, wie z.B. durch Einkondensieren, Verestern, Aufpropfen und dergl. Die Gehalte an funktionellen Acryloxy- und/oder Methacryloxygruppen liegen bei den Komponenten a), b) und c) - wie in der EP-A-270 831 beschrieben - bei mindestens 0,1 Gew.-%. Erfolgt dagegen eine Funktionalisierung in Verbindung mit monomerer Acryl- und/oder Methacrylsäure und deren Derivaten, kann der Gehalt auf 0,05 Gew.-% reduziert werden, wenn dabei der Mindestgehalt von 0,1 Gew.-% an funktionellen Gruppen nicht unterschritten wird.

Von besonderem Interesse gemäß vorliegender Erfindung sind die mit Acryloxy- und/oder Methacryloxygruppen funktionalisierten Komponenten a) und b) der EP-A-270 831 als Rückgratpolymere in den erfindungsgemäßen Schmelzmassen, denn die vorstehend beschriebenen vorteilhaften Eigenschaften, wie die Verbesserung der Adhäsion auf Metallsubstraten, niedrige Strahlendosen und erhöhte Flexibilität und Abrasionsfestigkeit im gehärteten Überzug lassen sich auch auf die damit funktionalisierten Rückgratpolymere übertragen. Gleiches gilt auch für die Physiologie und Toxizität der ungehärteten und gehärteten Schmelzmassen, wozu insbesondere der sehr niedrige Gehalt an unvernetzten funktionellen Gruppen beiträgt.

Infolge der höheren Molekulargewichte können die mono-, bi- und multifunktionellen Ester der Acryloxypropionsäure als oligomere Rückgratpolymere und/oder als reaktive Verdünner in den erfindungsgemäßen Schmelzmassen eingesetzt werden, vorzugsweise dann, wenn sie ein Molekulargewicht ≧ 500 besitzen. Besonders vorteilhaft wirkt sich dabei die höhere Polarität und Azidität auf die Haftung von Metallsubstraten im Vergleich zu Estern aus monomerer Acrylsäure aus. Werden sie als Quervernetzungsmittel eingesetzt, wird infolge der damit zu erzielenden geringeren Vernetzungsdichte mehr Flexibilität bzw. Zähelastizität in die gehärtete Matrix eingebaut. Auch aus sensorischer Sicht sind sie den Estern aus monomerer Acryl- und Methacrylsäure überlegen, weil sie praktisch geruchslos sind. Auch in ihren physiologischen und toxikologischen Werten sind sie, wie Untersuchungsbefunde zeigen, wesentlich besser zu beurteilen und leisten somit einen positiven Beitrag zur Arbeitshygiene und Ökologie.

Diese mit der Acryloxypropionsäure und deren Derivaten funktionalisierten Komponenten a), b) und c) können in Abhängigkeit ihres Molekulargewichtes allein oder in Verbindung mit einer oder mehreren Komponenten als Rohstoffe polymerisierbare und strahlenhärtbare Schmelzmassen eingesetzt werden. Dies gilt insbesondere dann, wenn die Molekulargewichte ≧ 500, vorzugsweise ≧ 1.000 sind. Da die bi- und multifunktionellen Ester der Acryloxypropionsäure diese Forderungen erfüllen können, lassen sich damit Schmelzmassen entwickeln, die insbesondere auch der sogen. "Heat History" Rechnung tragen, d.h. es können erfindungsgemäß Schmelzmassen entwickelt werden, die niedere Schmelztemperaturen und -viskositäten besitzen und z.B. trotzdem auf den kritischen Weißblechoberflächen noch eine optimale Haftung gewährleisten. Durch diese Tatsache wird nicht nur die Gefahr zur Bildung von Crackprodukten reduziert, sondern durch die relativ stark erhöhte Reaktivität ein wesentlich verbesserter Vernetzungsgrad bei niederer Strahlendosis bei der Strahlenhärtung oder kürzen Polymerisationszeiten bei einer frei radikalischen Vernetzung in der Wärme erzielt.

Infolge des höheren Vernetzungsgrades und der geringeren Vernetzungsdichte lassen sich damit über Schmelzmassen Überzüge auf diversen Werkstoff- und Substratoberflächen herstellen, die den heutigen und zukünftigen gesetzlichen Anforderungen an Packmittel für den Lebensmittel- und Pharmaziebereich gewachsen sind. Aber auch für andere Einsatzgebiete, wie z.B. im Karosseriebau, in der Luft- und Raumfahrttechnik, bieten die erfindungsgemäßen Schmelzmassen Vorteile und geben Impulse für neue Technologien, die gleichzeitig umweltfreundlicher sind.

Die Herstellung der neuen erfindungsgemäßen Schmelzmassen erfolgt gemäß den Verfahrensbedingungen der EP-A-270 831. Da höhere Anteile an Estern der Acryloxypropionsäure in den Schmelzmassen eingesetzt werden können, lassen sich die Aufbereitungstemperaturen nicht unerheblich reduzieren. Analoges gilt natürlich auch für das Austüsten von Substraten und Formkörpern mit den erfindungsgemäßen, polymerisierbaren Schmelzmassen. Die Härtung selbst erfolgt ebenfalls unter einer Shutzgasatmosphäre.

Im übrigen ist der Inhalt der EP-A-270 831 als Offenbarung der vorliegenden Erfindung anzusehen.

Anhand von nachfolgenden Beispielen wird die Erfindung näher erläutert, ohne auf diese beschränkt zu sein.

Die vorzugsweise eingesetzten Rückgratpolymere sind in den Tabellen 3 und 4 zusammengefaßt. Diese Rückgratpolymere korrespondieren mit denen der EP-A-270 831.

Beispiel 1

Zur Herstellung von Schmelzmassen wurden je 30 Gew.-Teile Celluloseester 3A in jeweils 70 Gew.-Teile der folgenden Verbindungen:
Propoxytrimethylolpropantriacrylat (Masse 1)
Trimethylolpropantriacrylat (Masse 2) und
Trimethylolpropantriacryloxypropionat (Masse 3)
bei 125 °C gelöst und anschließend im Vakuum entgast. Die Massen wurden auf +80 °C abgekühlt und damit Filme auf einem silikonierten Papier in einer Schichtstärke von 12 µm gegossen. Die Filme wurden dann mit unterschiedlichen Strahlendosen mit Elektronenstrahl gehärtet. Die Ergebnisse sind in der nachstehenden Tabelle zusammengefaßt.

| Schmelzmasse Nr. | ESH-Dosis Mrad | Zugfestigkeit N/mm$^2$ | Dehnung % |
|---|---|---|---|
| 1 | 1<br>2<br>3 | 6,5<br>21,0<br>32,0 | 7,0<br>3,2<br>2,8 |
| 2 | 1<br>2<br>3 | zu spröder Film für einen Test | |
| 3 | 1<br>2<br>3 | 45,0<br>49,0<br>52,0 | 6,8<br>5,9<br>5,2 |

Dieses Beispiel zeigt, daß u.a. infolge der höheren Reaktivität der Acryloxygruppen bereits bei niedriger Strahlendosis höhere Zugfestigkeitswerte und infolge der reduzierten Quervernetzungsdichte wesentlich verbesserte Dehnungswerte im Vergleich zu den konventionellen Rückgratpolymeren und reaktiven Monomeren erzielt werden.

Beispiel 2

Es wurden 3 Schmelzmassen aus je 5 Gew.-Teilen des Celluloseesters 4A durch Lösen in jeweils 95 Gew.-Teilen der folgenden Verbindungen
Propoxytrimethylolpropantriacrylat (Masse 1)
Trimethylolpropantriacrylat (Masse 2)
Trimethylolpropantriacryloxypropionat (Masse 3)
bei 100 °C hergestellt und entgast. Anschließend kühlte man die Schmelzmassen auf +70 °C ab und stellte auf Aluminiumblechstreifen Filme in einer Stärke von 5 µm her. Diese Naßfilme wurden mit niedrigen ESH-Strahlendosen gehärtet. Die gehärteten Filme wurden dem Rub-off-Test mit Toluol unterzogen. Folgende Ergebnisse wurden erzielt:

| ESH-Dosis Mrad | Schmelzmasse | | |
|---|---|---|---|
| | Nr. 1 | Nr. 2 | Nr. 3 |
| 0,1 | 20 | 10 | 50 |
| 0,2 | 24 | 17 | i.O |
| 0,3 | 38 | 28 | |
| 0,4 | 50 | 42 | |
| 0,5 | i.O | i.O | |

Diese Ergebnisse bestätigen nicht nur die höhere Reaktivität der mit Acryloxypropionsäure funktionalisierten Verbindungen, sondern es wurden auch die verbesserten Reibwiderstände deutlich.

Der Lösemittel-Reibtest wurde in der Form durchgeführt, daß eine Fläche von ca. 1 $cm^2$ des gehärteten Films mit 10 Tropfen Toluol benetzt und anschließend fünfzigmal mit einer gewickelten Strahlrute (wire-wound-rod) Nr. 4 in einem Vorwärts- und Rückwärtszyklus beansprucht wurde.

Beispiel 3

15 Gew.-Teile des Celluloseesters 6A und 65 Gew.-Teile des Copolyesters Nr. 1A werden gemeinsam im Schmelzkneter bei +180°C aufgeschmolzen und homogen miteinander gemischt. Sobald eine homogene Schmelze erreicht worden ist, wird die esse im Vakuum entgast.

Beispiel 4

85 Gew.-Teile des Copolyesters Nr. 2A werden bei +100°C im Schmelzkneter aufgeschmolzen und anschließend werden 5 Gew.-Teile Celluloseester 3A und 10 Gew.-Teile Trimethylolpropantriacryloxypropionat (MG580) zugesetzt. Sobald alle Bestandteile homogen gemischt sind, wird die Masse im Vakuum entgast.

Beispiel 5

80 Gew.-Teile des Copolyesters Nr. 3A werden gemeinsam mit dem Celluloseester Nr. 3 der EP-A-270 831 130°C im Schmelzkneter aufbereitet und nach Erzielen einer homogenen Mischung wurde sie im Vakuum entgast.

Beispiele 6-14

In den folgenden Beispielen 6 bis 14 (Tabelle 5) werden erfindungsgemäße Schmelzmassen aus Polymer a), Polymer b) und/oder Oligomer c) der EP-A-220 831 und den Komponenten a), b) und c) der vorliegenden Anmeldung beschrieben. Die Aufbereitung der einzelnen Rohstoffe erfolgte nach einer der in den Beispielen 1 bis 5 beschriebenen Verfahrenstechnik.

Beispiel 15

Die Schmelzmassen der Beispiele 3 bis 14 wurden im Schmelzkneter bzw. Schmelzdissolver auf die jeweils erforderliche Applikationstemperatur zwischen 100°C und 140°C gebracht und damit Substrate aus Aluminium, Stahl, Polyvinylchlorid und Kraftpapier beschichtet. Die Prüfsubstrate (18 x 12,5 cm) wurden mit Auftragsgewichten von 3 bis 10 g/$m^2$ beschichtet. Die Substrate und der Auftragsrakel wurden auf unterschiedliche Temperaturen vorgewärmt. Je nach Härtungsart - soweit erforderlich - wurden den polymerisierbaren Schmelzmassen kurz vor der Applikation folgende Reaktionsinitiatoren zugesetzt:

Freiradikalische Härtung (FRH): 1,8 Gew.-% Dicumylperoxid (50%ig in Weichmacher)
UV-Härtung: 3,0 Gew.-% IRGACURE® 184
Elektronenstrahlhärtung (ESH): keine Zusätze

Die Härtungsbedingungen waren folgende:

Freiradikalische Härtung (FRH):

a) Metalle: 150-200°C
b) PVC: 120°C

| | |
|---|---|
| | c) Kraftpapier: 140 °C |
| UV-Härtung: | 30 Sekunden mit einer UV-Lampe 80 Watt/cm unter Stickstoffatmosphäre |
| Elektronenstrahlhärtung (ESH): | 1 bis 3 Mrad |
| | a) Schutzgas, $N_2$ |
| | b) Wassertaufilm |

Nach der Härtung der Schmelzmassen auf den diversen Substraten wurden diese 24 Stunden bei 23 °C gelagert und anschließend deren Haftung vor und nach einem Sterilisationstest geprüft. Die Sterilisationsbedingungen waren 60 Minuten bei +129 °C im Wasserdampf. Die Haftung wurde mittels dem bekannten Gitterschnitt-Test und der Klebbandprobe (TESAFILM® 154) ermittelt. Die Ergebnisse sind in Tabelle 4 zusammengefaßt.

Beurteilungskriterien

| | |
|---|---|
| sehr gut | = glatte Schnittkanten beim Gitterschnitt und kein Abheben des Films mit Klebband; keine Beschichtungsfilmtrübung nach Sterilisation mittels Dampf |
| gut | = glatte Schnittkanten beim Gitterschnitt und kein Abheben des Films mit Klebband; leichte Beschichtungsfilmtrübung nach Sterilisation mittels Dampf |
| befriedigend | = noch glatte Schnittkanten und kein Abheben des Films mit Klebband; Filmtrübung nach Sterilisation mittels Dampf |
| unbefriedigend | = schlechte Haftung beim Gitterschnitt |

| Eigenschaften | Acrylsäure | Methacrylsäure | Acryloxypropionsäure | Gemisch aus di- bis pentamerer Acrylsäure |
|---|---|---|---|---|
| Molekulargewicht | 72 | 86 | 144 | 175 |
| Siedepunkt | 141 °C | 160 °C | 96 - 98 °C (0,1 mm) | 96 - 97 °C (0,1 mm) |
| Gefrierpunkt | 13,5 °C | 15 °C | -20 °C | -20 °C |
| Dichte/20 °C, $g/cm^3$ | 1,0511 | 1,0153 | 1,2019 | 1,202 |
| Viskosität mPa.s | 1,3 | 1,3 | 30 - 32 | 150 |
| Glastemperatur ($T_g$) | 105 °C | 22 °C | 22 °C | 12 |
| pKa (Monomer) | 4,25 | 4,43 | 3,9 | 3,9 |
| pKa (Polymer) / 50 % Ethanol) | 8,8 | 9,5 | 8,1 | 8,1 |

Tabelle 1 : Physikalische Eigenschaften von monomeren, dimeren und oligomeren Acrylsäuren.

| | Molekulargewicht | Visk./25 °C Nr. 2/30 mPa.s | Dichte g/cm³ | Siedepunkt °C | Gefrierpunkt °C | Polymerisationsschrumpf % |
|---|---|---|---|---|---|---|
| Ester der Acryloxypropionsäure mit | | | | | | |
| - Trimethylolpropan | 550 | 700-800 | 1,2 | > 300 | < -20 | 10,0 |
| - Diethylenglykol | 380 | 50-70 | 1,13 | > 300 | < -20 | 9,1 |
| - Neopentylglykol | 380 | 70-100 | 1,19 | > 300 | < -20 | 9,7 |
| Ester mit Gemischen aus di- bis pentameren Acryloxypropionsäure und | | | | | | |
| - Trimethylolpropan | 580 | 750 | 1,195 | > 300 | < -20 | 10,1 |
| - Diethylenglykol | 400 | 90 | 1,178 | > 300 | < -20 | 9,2 |
| Ester der monomeren Acrylsäure mit | | | | | | |
| - Trimethylolpropan | 296 | 100 | 1,1 | > 180 (1mm) | -25 | 14,6 |
| - Diethylenglykol | 214 | 8,0 | 1,08 | 240 | -20 | 14,4 |

Tabelle 2 : Vergleichende Eigenschaften zwischen Estern aus monomeren Acrylsäuren und Estern aus Acryloxypropionsäuren.

| | Molekulargewicht $\overline{M}_w$ | $\overline{M}_w/M_n$ | $T_g$ °C | Schmelzpunkt °C | Gehalt an funktion. Gruppen Acryl- Gew. - % | Acryloxypropion- Gew. - % | OH-Zahl Gew. - % |
|---|---|---|---|---|---|---|---|
| Celluloseester 3A | 36.000 | 4,5 | 95 | 110–125 | - | 0,8 | 1,1 |
| Celluloseester 4A | 185.000 | 18,5 | 118 | 155–165 | - | 0,6 | 1,4 |
| Celluloseester 6A | 61.000 | 2,8 | 118 | 150–160 | 1,5 | 1,5 | 3,8 |

Tabelle 3: Polymerisierbare Celluloseester

| | Molekulargewicht | | $T_g$ | SZ | OH 2 | Viskosität | Gehalt an funktionellen Gruppen | |
|---|---|---|---|---|---|---|---|---|
| | $\overline{M}_w$ | $\overline{M}_w/M_n$ | °C | mg KOH / g | | 120 °C Pa.s | Acryl- Gew. - % | Acryloxyproprion - Gew. - % |
| Copolyester Nr. 1A | 2.000 | 2,9 | -10 | 8,5 | 9 | 8 | - | 1,8 |
| Copolyester Nr. 2A | 4.000 | 3,5 | +10 | 6,4 | 7 | 14 | - | 1,4 |
| Copolyester Nr. 3A | 3.000 | 3,2 | +10 | 6,2 | 8 | 13 | 0,08 | 0,08 |

Tabelle 4 : Polymerisierbare Copolyester

| ROHSTOFFE | Beispiele Nr. / Gewichtsteile | | | | | | | | |
|---|---|---|---|---|---|---|---|---|---|
| | 6 | 7 | 8 | 9 | 10 | 11 | 12 | 13 | 14 |
| **Polymer A** | | | | | | | | | |
| Celluloseester 3 | 10 | - | - | - | - | - | - | - | - |
| Celluloseester 4 | - | 5 | - | 15 | - | - | - | - | - |
| Celluloseester 3A | 10 | - | 20 | - | 20 | 10 | - | - | 10 |
| Celluloseester 4A | - | 5 | - | - | - | - | - | - | - |
| Polyvinylalkolhol MG 18.000, 0,4 % Acryloxypropionsäure | - | - | - | - | - | - | 10 | - | - |
| Novolakacryloxy-propionat | 50 | 25 | 50 | - | - | 40 | - | - | - |
| **Polymer B** | | | | | | | | | |
| Copolyester 1 | - | 65 | - | - | 20 | - | - | 20 | 10 |
| Copolyester 2 | - | - | - | - | - | - | - | - | |
| Copolyester 1A | - | - | - | - | 20 | - | - | 40 | 20 |
| Copolyester 2A | - | - | - | - | - | - | 60 | - | 20 |
| **Oligomer C** | | | | | | | | | |
| $TMPTA_2$* | 30 | - | 30 | 85 | 30 | 45 | 20 | - | 10 |
| $DEGDA_2$* | - | - | - | - | 10 | - | - | - | 10 |
| Silikonacrylat* | - | - | - | - | - | 5 | - | 20 | - |
| Bisphenol-A-diacryloxypro-prionat | - | - | - | - | - | - | 10 | 20 | 20 |

---

*$TMPTA_2$ = Trimethylolpropantriacryloxypropionat
$DEGDA_2$ = Diethylenglykoldiacryloxypropionate
Silikonacrylat = Gehalt an dimerer Acrylsäure (Acryloxypropionsäure) von ca. 20 Gew.-%.

Tabelle 5

Tabelle 6

| Schmelzmasse Nr. | Substrat | Applicationstemperatur °C | Härtungsart | Haftung (Gitterschnitt-Test mit Klebband) 20 °C | nach Sterilisation |
|---|---|---|---|---|---|
| 3 | Weißblech | 130 | ESH 1Mrad | sehr gut | gut |
| 4 | Alu | 130 | ESH 1Mrad | sehr gut | sehr gut |
| 5 | Stahl | 130 | ESH 1Mrad | sehr gut | sehr gut |
| 6 | Weißblech | 140 | ESH 2Mrad | sehr gut | gut |
| 7 | Alu | 140 | ESH 3Mrad | sehr gut | sehr gut |
| 8 | Weißblech | 120 | ESH 1Mrad | gut | gut |
| 9 | PVC | 120 | ESH 2Mrad | sehr gut | gut |
| 10 | Papier | 140 | UV | gut | befriedigend |
| | | | FRH | gut | gut |
| 11 | Alu | 120 | ESH 2Mrad | sehr gut | sehr gut |
| 12 | Stahl | 130 | ESH 3Mrad | sehr gut | gut |
| 13 | Weißblech | 140 | ESH 1Mrad | sehr gut | gut |
| 14 | Stahl | 120 | ESH 1Mrad | sehr gut | sehr gut |

## Patentansprüche

1. Lösungsmittelfreie, monomerarme bzw. -freie, polymerisierbare Schmelzmasse zum korrosionsbeständigen, abrasionsfesten Ausrüsten und/oder zur Ausbildung eines Schutzfilmes mit Barriereeigenschaften auf flächigen Substraten und Formkörpern aus Metall, Kunststoff, Cellulose-Materialien und/oder

anorganischen Materialien, insbesondere solche für Verpackungszwecke, bestehend aus

a) einem oder mehreren polymerisierbaren, hydroxylhaltigen Polymeren mit einem mittleren Molekulargewicht ($\overline{M}_w$) zwischen 1.000 und 500.000 und einer Glasübergangstemperatur ($T_g$) $\geqq$ +20 °C und/oder

b) einem oder mehreren polymerisierbaren, linearen unverzweigten und/oder verzweigten Polyestern und/oder deren Copolymeren mit einem mittleren Molekulargewicht ($\overline{M}_w$) zwischen 800 und 50.000 und einer Glasübergangstemperatur ($T_g$) $\geqq$ -50 °C und/oder

c) einem polymerisierbaren, ethylenisch ungesättigte Gruppen tragenden Oligomer aus Acryl-, Methacryl-, Ether-, Ester-, Urethan-, Amid-, Imid-, Epoxid-, Siloxan-, Phenol-, Novolak- und/oder Mercaptoverbindungen mit einem mittleren Molekulargewicht ($\overline{M}_w$) von 400 bis 10.000 und

d) gegebenenfalls weiteren bekannten Zusätzen,

**dadurch gekennzeichnet,** daß sie solche Komponenten a), b) und/oder c) enthält, die mit einer oder mehreren dimeren und/oder oligomeren Acrylsäure der allgemeinen Formel

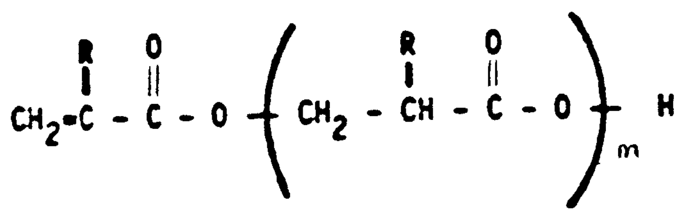

worin R = H, -CN, Halogen und/oder eine Alkylgruppe mit 1 bis 4 C-Atomen, m = eine Zahl zwischen 1 und 5 ist,
funktionalisiert worden sind.

**2.** Schmelzmasse nach Anspruch 1, **dadurch gekennzeichnet,** daß wenigstens eine der polymerisierbaren Verbindungen teilkristallin und/oder kristallin ist.

**3.** Schmelzmasse nach Anspruch 1 und/oder 2, **dadurch gekennzeichnet,** daß das hydroxylgruppenhaltige Polymer A ein Cellulosederivat, insbesondere ein Celluloseester und/oder Celluloseether mit einem Gehalt von mindestens 0,1 Gew.-% an reaktiven Acryl- und/oder Methacrylgruppen ist und ein mittleres Molekulargewicht ($\overline{M}_w$) zwischen 10.000 und 250.000 besitzt.

**4.** Schmelzmasse nach Anspruch 1 und/oder 2, **dadurch gekennzeichnet,** daß das hydroxylgruppenhaltige Polymer A ein Polyvinylalkoholderivat mit einem Gehalt von $\geqq$ 0,1 Gew.-% an reaktiven Acryl- und/oder Methacrylgruppen, mit einem mittleren Molekulargewicht ($\overline{M}_w$) zwischen 10.000 und 100.000 und einer Glasübergangstemperatur ($T_g$) $\geqq$ +20 °C ist.

**5.** Schmelzmasse nach Anspruch 1 und/oder 2, **dadurch gekennzeichnet,** daß das hydroxylgruppenhaltige Polymer A ein Phenol- oder Novolakderivat mit einem Gehalt von $\geqq$ 0,1 Gew.-% an reaktiven Acryl- und/oder Methacrylgruppen, mit einem mittleren Molekulargewicht ($\overline{M}_w$) zwischen 1.000 und 50.000 und einer Glasübergangstemperatur ($T_g$) $\geqq$ +20 °C ist.

**6.** Schmelzmasse nach einem der Ansprüche 1 bis 5, **dadurch gekennzeichnet,** daß das Polymer B ein linearer unverzweigter und/oder verzweigter Polyester und/oder Copolyester mit einem Gehalt von $\geqq$ 0,1 Gew.-% an reaktiven Acryl- und/oder Methacrylgruppen, mit einem mittleren Molekulargewicht ($\overline{M}_w$) zwischen 1.000 und 20.000, insbesondere 1.000 und 10.000, und einer Glasübergangstemperatur (Tg) $\leqq$ +50 °C ist.

**7.** Schmelzmasse nach einem der Ansprüche 1 bis 6, **dadurch gekennzeichnet,** daß das Polymer B ein hydroxylgruppentragender Basispolyester aus

a) Hydroxylpolyester mit verzweigter, aus Polyestereinheiten bestehenden Ketten mit Verzweigungen an dritten und höheren polyesterbildenden Funktionen und/oder

b) Hydroxylpolyester mit über Ester- oder Ethergruppen von dritten oder höheren polyesterbildenden Funktionen gebunden Alkylseitenketten mit 2 bis 50 C-Atomen, insbesondere 4 bis 36 C-Atomen, in der Alkylgruppe mit einem Gehalt von $\geqq$ 0,1 Gew.-% an reaktiven Acryl-und/oder

Methacrylgruppen, mit einem mittleren Molekulargewicht ($\overline{M}_w$) von 1.000 bis 20.000, insbesondere 1.000 bis 10.000, und einer Glasübergangstemperatur ($T_g$) ≦ +50 °C, insbesondere ≦ +20 °C, ist.

**8.** Verfahren zur Herstellung der Schmelzmassen nach einem der Ansprüche 1 bis 7, **dadurch gekennzeichnet,** daß man die Komponente A gegebenenfalls in an sich bekannter Weise mit einem Schutzgas spült bzw. wäscht und/oder in einer wäßrigen Suspension, vorzugsweise unter Vakuum, entgast und die Komponente A auf ihren Schmelz- bzw. Erweichungspunkt vorwärmt, um +20 °C bis 60 °C über den Schmelz- bzw. Erweichungspunkt erhitzt, gegebenenfalls die Komponente B sowie gegebenenfalls C und/oder D unter einer Schutzgasatmosphäre zusetzt, wobei die Komponente B bzw. C ebenfalls auf Temperaturen vorerhitzt werden, die mindestens dem Schmelz- bzw. Erweichungspunkt der Komponente A entsprechen, sowie gegebenenfalls die Komponente D vorzugsweise im vorgewärmten Zustand zusetzt und anschließend die so aufbereitete Schmelzmasse entgast.

**9.** Verfahren zur Herstellung einer Schmelzmasse nach einem der Ansprüche 1 bis 7, **dadurch gekennzeichnet,** daß man die Komponente B aufschmilzt, gegebenenfalls in Schutzgasatmosphäre, entgast und danach gegebenenfalls die Komponente C und/oder D zusetzt.

**10.** Verfahren nach Anspruch 8, **dadurch gekennzeichnet,** daß vor der Entgasung der wäßrigen Suspension in der wäßrigen Phase eine Vortrocknung bei einer Temperatur von ca. 10 °C unter dem Schmelz- bzw. Erweichungspunkt der Komponente A erfolgt.

**11.** Verfahren nach einem der Ansprüche 8 bis 10, **dadurch gekennzeichnet,** daß die Schlußentgasung bei einem Vakuum bis zu $10^{-1}$ Torr erfolgt.

**12.** Verfahren nach einem der Ansprüche 8 bis 11, **dadurch gekennzeichnet,** daß die Schmelzmasse schnell abgekühlt und gegebenenfalls granuliert wird.

**13.** Verfahren nach einem der Ansprüche 8 bis 12, **dadurch gekennzeichnet,** daß man als Schutzgas eines aus der Gruppe Stickstoff, Kohlendioxid und Edelgas einsetzt.

**14.** Verfahren zur Verarbeitung und Aufbringung der Schmelzmasse nach einem der Ansprüche 1 bis 7, auf flächige Substrate und/oder Formkörper, **dadurch gekennzeichnet,** daß man das Substrat und/oder den Formkörper auf mindestens ≧ +50 °C vorwärmt und dann die flüssige Schmelzmasse in an sich bekannter Weise aufträgt und anschließend in an sich bekannter Weise polymerisiert.

**15.** Verfahren nach Anspruch 14, **dadurch gekennzeichnet,** daß man nach dem Auftrag der flüssigen Schmelzmasse diese in an sich bekannter Weise vorpolymerisiert bis zur ausreichenden weiteren Bearbeitung, dann das Substrat bzw. den Formkörper verformt und anschließend in bekannter Weise fertig härtet.

**16.** Verfahren nach Anspruch 14 oder 15, **dadurch gekennzeichnet,** daß man in einem inerten Medium arbeitet.

**17.** Verfahren nach Anspruch 16, **dadurch gekennzeichnet,** daß man Stickstoff, Kohlendioxid oder Edelgase verwendet.

**18.** Verfahren nach Anspruch 16 oder 17, **dadurch gekennzeichnet,** daß man das inerte Medium vorwärmt.

**19.** Verfahren nach einem der Ansprüche 14 bis 18, **dadurch gekennzeichnet,** daß man im Falle von Kunststoffen als Substrat oder Formkörper diese auf eine Temperatur vorwärmt, die ≦ 10 °C unter dem Erweichungspunkt liegt.

**20.** Verfahren nach Anspruch 19, **dadurch gekennzeichnet,** daß man im Falle von Cellulose bzw. anorganischen Materialien als Substrat diese auf eine Temperatur ≧ +100 °C vorwärmt.

**21.** Verfahren nach einem der Ansprüche 19 oder 20, **dadurch gekennzeichnet,** daß man die Härtung freiradikalisch mit Peroxid- bzw. Hydroperoxidinitiatoren in Wärme oder mittels UV- oder mittels

Elektronenstrahl durchführt.

**22.** Verfahren nach Anspruch 21, **dadurch gekennzeichnet,** daß man die Polymerisation in an sich bekannter Weise mittels Elektronenstrahl durchführt.

**23.** Verfahren zum Polymerisieren bzw. Härten der Schmelzmasse nach einem der Ansprüche 1 bis 7, **dadurch gekennzeichnet,** daß man Trink- oder voll entsalztes Wasser auf die auf ein Substrat heiß aufgetragene Polymerisier- und Schmelzmassen kalt aufsprüht und gleichzeitig die beschichteten Substrate unter Bildung einer Atmosphäre hoher Luftfeuchtigkeit und Niederschlag eines Taus auf der nichtgehärteten Schmelzmassenoberfläche abkühlt und nach dem Aushärten und Polymerisieren das noch vorhandene Wasser in an sich bekannter Weise entfernt.

## Claims

**1.** Solvent-free, low in monomer or monomer-free, polymerizable melting mass for producing corrosion-resistant, abrasion-proof coatings and/or for producing a protective film having barrier characteristics on sheet substrates and moulded bodies comprising metal, synthetic material, cellulose material and/or inorganic materials, in particular such items intended for packaging purposes comprising:

a) one or more polymerizable polymers which contain hydroxyl and which have an average molecular weight ($\overline{M}_w$) between 1,000 and 500,000 and a glass transition temperature of ($T_g$) ≧ +20°C and/or

b) one or more polymerizable linear unbranched and/or branched polyesters and/or their copolymers having an average molecular weight ($\overline{M}_w$) between 800 and 50,000 and a glass transition temperature ($T_g$) ≧ -50°C and/or

c) a polymerizable oligomer, which carries ethylene unsaturated groups and comprises acrylic, methacrylic, ether, ester, urethane, amide, imide, epoxide, siloxane, phenol, novolac and/or mercapto compounds with an average molecular weight ($\overline{M}_w$) of 400 to 10,000 and

d) if necessary other known additives,

characterised in that it comprises such components a), b) and/or c) which are functionalized with one or more dimeric and/or oligomer acrylic acid of the general formula:

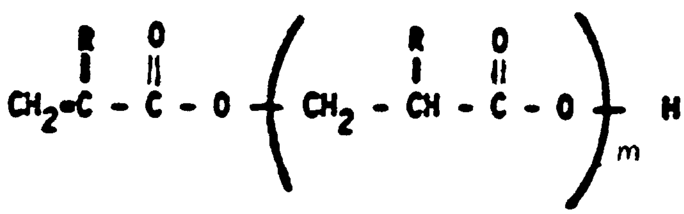

wherein R = H, -CN, is halogen and/or an acrylic group having 1 to 4 C-atoms, m = a number between 1 and 5.

**2.** Melting mass according to claim 1, characterised in that at least one of the polymerizable compounds is partly crystalline and/or crystalline.

**3.** Melting mass according to claim 1 and/order 2, characterised in that the polymer A containing the hydroxyl groups is a derivative of cellulose, especially a cellulose ester and/or cellulose ether having a content of at least 0.1 percentage weight of reactive acrylic and/or methacrylic groups and has an average molecular weight ($\overline{M}_w$) of between 10,000 and 250,000.

**4.** Melting mass according to claim 1 and/or 2, characterised in that the polymer A containing the hydroxyl groups is a derivative of polyvinyl alcohol having a content of ≧ 0.1 percentage weight of reactive acrylic and/or methacrylic groups, having an average molecular weight ($\overline{M}_w$) of between 10,000 and 100,000 and a glass transition temperature of ($T_g$) ≧ +20°C.

**5.** Melting mass according to claim 1 and/or 2, characterised in that the polymer A containing the hydroxyl groups is a derivative of phenol or novolac having a content of ≧ 0.1 percentage weight of reactive

acrylic and/or methacrylic groups, having an average molecular weight ($\overline{M}_w$) of between 1,000 and 50,000 and a glass transition temperature ($T_g$) ≧ +20 °C.

6. Melting mass according to one of claims 1 to 5, characterised in that polymer B is a linear unbranched and/or branched polyester and/or copolyester having a content of ≧0.1 percentage weight of reactive acrylic and/or methacrylic groups, having an average molecular weight ($\overline{M}_w$) of between 1,000 and 20,000, especially 1,000 and 10,000, and a glass transition temperature ($T_g$) ≦ +50 °C.

7. Melting mass according to one of claims 1 to 6, characterised in that the polymer B is a base polyester carrying hydroxyl groups and the base polyester comprises
a) hydroxyl polyester having branched chains which comprise polyester units and which branch to third and higher polyester-forming functions and/or
b) hydroxyl polyester having alkyl lateral chains which are bound by way of ester or ether groups by third or higher polyester-forming functions and which have 2 to 50 C-atoms, especially 4 to 36 C-atoms, in the alkyl group having a content of ≧ 0.1 percentage weight of reactive acryl and/or methacryl groups, having an average molecular weight ($\overline{M}_w$) of 1,000 to 20,000, especially 1,000 to 10,000, and a glass transition temperature ($T_g$) ≦ +50 °C, especially ≦ +20 °C.

8. Method for producing the melting masses according to one of claims 1 to 7, characterised in that the components A are rinsed and/or washed with a protective gas if necessary in a manner known per se and/or are degassed in an aqueous suspension, preferably under a vacuum, and the components A are preheated to their melting and/or softening point, at +20 °C to 60 °C above the melting and softening point, if necessary the components B as well as if necessary C and/or D are added in an atmosphere of protective gas, wherein the components B and/or C are likewise preheated to temperatures which correspond at least to the melting and/or softening point of components A, as well as if necessary the components D are preferably added in the preheated condition and subsequently the melting mass prepared in this way is degassed.

9. Method for producing a melting mass according to one of claims 1 to 7, characterised in that the components B are melted, if necessary in an atmosphere of protective gas, degassed and subsequently if necessary the components C and/or D are added.

10. Method according to claim 8, characterised in that prior to degassing the aqueous suspension in the aqueous phase the components A are predried at a temperature of approx. 10 °C below the melting and/or softening point.

11. Method according to one of claims 8 to 10, characterised in that the final degassing is carried out in a vacuum of up to $10^{-1}$ torr.

12. Method according to one of claims 8 to 11, characterised in that the melting mass is cooled rapidly and if necessary granulated.

13. Method according to one of claims 8 to 12, characterised in that the protective gas used is from the group of nitrogen, carbon dioxide and noble gas.

14. Method for processing and applying the melting mass according to one of claims 1 to 7 to a flat substrate and/or a moulded body, characterised in that the substrate and/or the moulded body is preheated to at least ≧ +50 °C and then the liquid melting mass is applied in a manner known per se and subsequently polymerized in a manner known per se.

15. Method according to claim 14, characterised in that after the liquid melting mass has been applied, it is prepolymerized in a manner known per se until it has been sufficiently processed further, then the substrate and/or the moulded body are shaped and subsequently finish hardened in a known manner.

16. Method according to claim 14 or 15, characterised in that processing takes place in an inert medium.

17. Method according to claim 16, characterised in that nitrogen, carbon dioxide or nobles gases are used.

**18.** Method according to claim 16 or 17, characterised in that the inert medium is preheated.

**19.** Method according to one of claims 14 to 18, characterised in that when synthetic materials are used as the substrate or the moulded body, this is preheated to a temperature which lies ≦ 10 °C below the softening point.

**20.** Method according to claim 19, characterised in that when cellulose and/or inorganic materials are used as the substrate, this is preheated to a temperature ≧ +100 °C.

**21.** Method according to one of claims 19 or 20, characterised in that the hardening process is carried out in a free-radical manner with peroxide or hydroperoxide initiators in heat or by means of UV rays or by means of electron beams.

**22.** Method according to claim 21, characterised in that the polymerization is carried out in a manner known per se by means of electron beams.

**23.** Method for polymerizing or hardening the melting mass according to one of claims 1 to 7, characterised in that drinking water or fully demineralized water is sprayed cold on to the polymerizing and melting masses which are applied hot to a substrate and simultaneously the coated substrate is cooled while forming an atmosphere of high air humidity and precipitation of a dew on the non-hardened melting mass surface and after the hardening and polymerizing process the water which is still present is removed in a manner known per se.

**Revendications**

**1.** Masse fondue polymérisable exempte de solvant, pauvre en monomère ou exempte de monomère, destinée à former des revêtements résistant à la corrosion et résistant à l'abrasion et/ou à constituer un film protecteur à propriétés d'écran sur des substrats plats ou corps moulés en métal, matière plastique, matières cellulosiques et/ou matières inorganiques, en particulier des substrats ou corps de ce genre destinés à des applications à l'emballage, composée de

a) un ou plusieurs polymères polymérisables, contenant des hydroxyles, possédant un poids moléculaire moyen ($M_w$) compris entre 1 000 et 500 000 et une température de transition vitreuse ($T_g$) ≧ +20 °C et/ou

b) un ou plusieurs polyesters polymérisables, linéaires, non ramifiés et/ou ramifiés. et/ou leurs copolymères, possédant un poids moléculaire moyen ($M_w$) compris entre 800 et 50 000, et une température de transition vitreuse ($T_g$) ≧ +50 °C et/ou

c) un oligomère polymérisable, portant des groupements éthyléniques insaturés, issus de composés acryles, méthacryles, éthers, esters, uréthanes, amides, imides, époxydes. siloxanes, phénols, novolaques et/ou mercapto de poids moléculaire moyen (Mw) de 400 à 10000, et

d) éventuellement d'autres additifs connus,

***caractérisée en ce qu'***elle contient des composants a), b) et/ou c) qui ont été fonctionnalisés avec un ou plusieurs acides acryliques dimères et/ou oligomères de la formule générale :

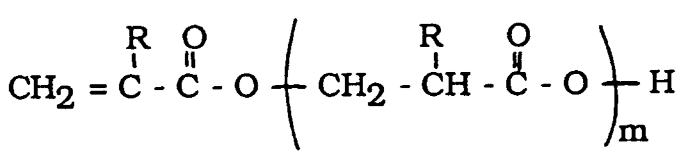

où R = H, -CN, un halogène et/ou un groupe alkyle contenant 1 à 4 atomes de C, m = un nombre entier de 1 à 5.

**2.** Masse fondue selon la revendication 1, ***caractérisée en ce qu'***au moins l'un des composés polymérisables est partiellement cristallin et/ou cristallin.

**3.** Masse fondue selon la revendication 1 et/ou 2, ***caractérisée en ce que*** le polymère A contenant des groupes hydroxyles est un dérivé de cellulose, en particulier un ester de cellulose et/ou éther de

cellulose ayant une teneur d'au moins 0,1 % en poids de groupes acryles et/ou méthacryles réactifs, et un poids moléculaire moyen (Mw) compris entre 10 000 et 250 000.

**4.** Masse fondue selon la revendication 1 et/ou 2, ***caractérisée en ce que*** le polymère A contenant des groupes hydroxyles est un dérivé d'alcool polyvinylique ayant une teneur ≧ 0,1 % en poids en groupes acryles et/ou méthacryles réactifs, un poids moléculaire moyen (Mw) compris entre 10 000 et 100 000 et une température de transition vitreuse (Tg)≧ +20 ° C.

**5.** Masse fondue selon la revendication 1 et/ou 2, ***caractérisée en ce que*** le polymère A contenant des groupes hydroxyles est un dérivé de phénol ou de novolaque ayant une teneur ≧ 0,1 % en poids en groupes acryles et/ou méthacryles réactifs, un poids moléculaire moyen (Mw) compris entre 1 000 et 50 000 et une température de transition vitreuse (Tg) ≧ +20 ° C.

**6.** Masse fondue selon une des revendications 1 à 5, ***caractérisée en ce que*** le polymère B est un polyester et/ou copolyester linéaire, non ramifié et/ou ramifié ayant une teneur ≧ 0,1 % en poids en groupes acryles et/ou méthacryles réactifs, un poids moléculaire moyen (Mw) compris entre 1000 et 20 000, notamment entre 1 000 et 10 000, et une température de transition vitreuse (Tg) ≦ +50 ° C.

**7.** Masse fondue selon une des revendications 1 à 6, ***caractérisée en ce que*** le polymère B est un polyester portant des groupes hydroxyles, issus de
a) hydroxylpolyester contenant des chaînes ramifiées composées d'unité polyesters avec des ramifications sur les fonctions formatrices de polyester de troisième rang ou de rang supérieur et/ou
b) hydroxylpolyester possédant des chaînes latérales alkyles, liées par l'intermédiaire de groupes esters et éthers des fonctions formatrices de polyester de troisième rang ou de rang supérieur, et contenant 2 à 50 atomes de C, notamment 4 à 36 atomes de C dans le groupe alkyle, avec une teneur ≧ 0,1 % en poids en groupes acryles et/ou méthacryles réactifs, un poids moléculaire moyen (Mw) de 1 000 à 20 000, en particulier de 1 000 à 10 000, et une température de transition vitreuse (Tg) ≦ +50 ° C, en particulier ≦ + 20 ° C.

**8.** Procédé de préparation des masses fondues selon une des revendications 1 à 7, ***caractérisé en ce qu"***on rince ou lave éventuellement les composants A d'une façon connue en soi avec un gaz protecteur, et/ou on les dégaze dans une suspension aqueuse, de préférence sous vide, et on préchauffe les composants A à leur point de fusion ou de ramollissement, puis on les chauffe de 20 ° C à 60 ° C au-delà du point de fusion ou de ramolissement, on ajoute éventuellement les composants B ainsi qu'éventuellement C et/ou D sous atmopshère de gaz protecteur, les composants B et éventuellement C étant aussi préchauffés à des températures qui correspondent au moins au point de fusion ou de ramollissement des composants A, et éventuellement, on ajoute le composant D, de préférence à l'état préchauffé et on dégaze ensuite la masse fondue ainsi préparée.

**9.** Procédé de préparation d'une masse fondue selon une des revendications 1 à 7, ***caractérisé en ce qu'***on fait fondre le composant B, éventuellement sous atmosphère de gaz protecteur, on le dégaze et, ensuite, on ajoute éventuellement les composants C et/ou D.

**10.** Procédé selon la revendication 8, ***caractériseé en ce qu'***avant le dégazage de la suspension aqueuse en phase aqueuse. on procède à un préséchage à une température inférieure d'environ 10 ° C au point de fusion ou de ramollissement du composant A

**11.** Procédé selon une des revendications 8 à 10, ***caractérisé en ce qu'***on procède au dégazage final sous un vide pouvant atteindre $10^{-1}$ Torr.

**12.** Procédé selon une des revendications 8 à 11, ***caractérisé en ce qu'***on refroidit rapidement la masse fondue et on là granule éventuellement.

**13.** Procédé selon une des revendications 8 à 12, ***caractérisé en ce qu'***on utilise comme gaz protecteur un gaz du groupe azote, dioxyde de carbone et gaz rares.

**14.** Procédé de transformation et d'application de la masse fondue sur des substrats plats et/ou des corps moulés, ***caractérisé en ce qu'***on préchauffe le substrat et/ou le corps moulé à au moins ≧ +50 ° C et,

ensuite, on applique la masse fondue liquide d'une façon connue en soi et, ensuite on la polymérise d'une façon connue en soi.

**15.** Procédé seon la revendication 14, ***caractérisé en ce qu'***après l'application de la masse fondue liquide, on prépolymérise cette masse d'une façon connue en soi, jusqu'à un état suffisant pour la transformation ultérieure, puis on déforme le substrat ou le corps moulé et, ensuite, on effectue le durcissement final d'une façon connue.

**16.** Procédé selon la revendication 14 ou 15, ***caractérisé en ce qu'***on travaille en milieu inerte.

**17.** Procédé selon la revendication 16, caractérisé en ce qu'on utilise de l'azote, du dioxyde de carbone ou des gaz rares.

**18.** Procédé selon la revendication 16 ou 17, ***caractérisé en ce qu'*****on** préchauffe le milieu inerte.

**19.** Procédé selon une des revendications 14 à 18, ***caractérise en ce que,*** dans le cas où l'on utilise des matières plastiques comme substrat ou corps moulés, on préchauffe ces matières à une température qui est inférieure de ≦ 10 ° C au point de ramollissement.

**20.** Procédé selon la revendication 19, ***caractérisée en ce que,*** dans le cas où l'on utilise de la cellulose ou des matières inorganiques comme substrat, on les préchauffe à une température ≧ +100 °.

**21.** Procédé selon une des revendications 19 et 20, ***caractérisé en ce qu'***on effectue le durcissement par voie à radicaux - libres, avec des initiateurs peroxydes ou hydroperoxydes, à chaud ou au moyen de rayons UV ou de faisceaux d'électrons.

**22.** Procédé selon la revendication 21, ***caractérisé en ce qu'o***n effectue la polymérisation d'une façon connue en soi au moyen d'un faisceau d'électrons.

**23.** Procédé de polymérisation ou de durcissement de la masse fondue selon une des revendications 1 à 7, ***caractérisé en ce qu'***on pulvérise à froid de l'eau potable ou de l'eau entièrement démineralisée sur les masses fondues et polymérisables appliquées à chaud sur un substrat et, en même temps, on refroidit les substrats revêtus avec formation d'une atmosphère à haute humidité de l'air et précipitation d'une rosée sur la surface non durcie de la masse fondue et, après le durcissement et la polymérisation, on élimine l'eau encore présente d'une façon connue en soi.